# EUROPEAN PATENT APPLICATION

(11) **EP 1 337 057 A2**
(43) Date of publication of application: **20.08.2003**
(21) Application number: 02022271.7
(22) Date of filing: 04.10.2002
(51) Int. Cl.: H04J 3/06, H04J 3/14, H04B 7/26

(54) **System and method for phase matching control in plural transmission channels**

(30) Priority: 19.02.2002 JP 2002042087
(71) Applicant: FUJITSU LIMITED, Kawasaki-shi, Kanagawa 211-8588 (JP)
(72) Inventor: Sunden, Hironobu, Fujitsu Digital Technology Ltd., Kanagawa 222-0033 (JP)
(74) Representative: HOFFMANN - EITLE

(57) **Abstract**

A phase matching control system for eliminating a phase offset in parallel transmission comprises a transmitter 222 for transmitting identical data and a receiver 223 for receiving the data, wherein each of transmitting units in the transmitter comprises a frame generating and transmitting unit (30, 35) for generating a frame having a cycle that is not less than twice the maximum predicted delay amount to insert phase information indicating a phase of the frame, and wherein each of receiving units comprises a phase matching unit (103, 104, 112, 113) for receiving the frame and the phase information and, based upon the phase information, outputting corresponding frames in plural transmission channels with matched phases.

## Description

### BACKGROUND OF THE INVENTION

### Field of the Invention

The present invention relates to a system and a method for phase matching control in plural transmission channels and, in particular, it relates to a system and a method for phase matching control that transmits a signal on plural channels with identical timing and receives it selectively after performing phase matching in a receiving unit in order to compensate for phase difference that may occur in a transmission process.

The present invention is applicable to, for example, a front end base station apparatus in cellular phone communication such as WCDMA (Wideband code Division Multiple Access), or a typical uninterrupted switching system and the like.

### Description of the Related Art

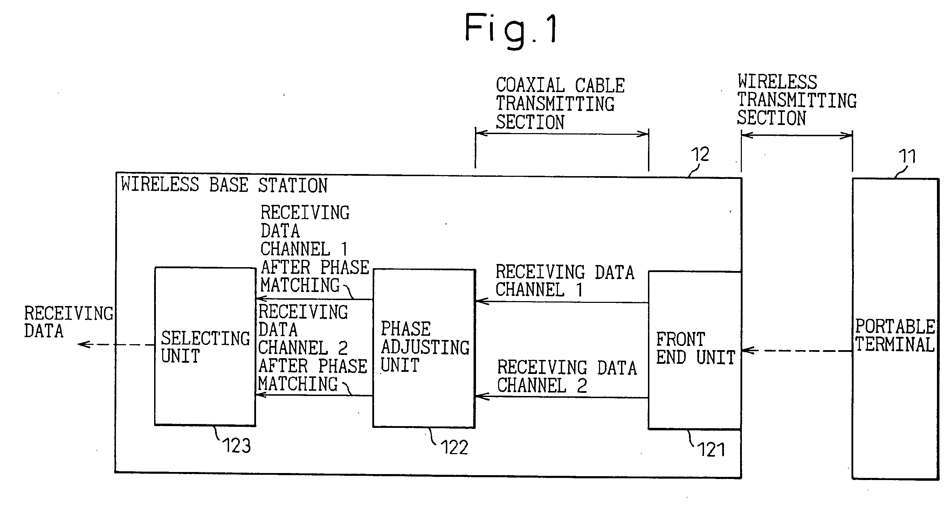

Fig. 1 is a block diagram showing a configuration of a conventional cellular phone communication system such as WCDMA that includes a wireless base station and a portable terminal. In Fig. 1, the cellular telephone communication system comprises a portable terminal 11 and a wireless base station 12. The wireless base station 12 comprises a front end unit 121 that includes an antenna unit, an amplifier unit and the like, a phase adjusting unit 122, and a selecting unit 123. The front end unit 121 is connected to the phase adjusting unit 122 via coaxial cables.

In operation, an upstream signal is transmitted from the portable terminal 11 to the wireless base station 12 via two channels in a wireless transmitting section. The base station apparatus 12 utilizes a diversity antenna as a receiving antenna in the antenna unit in the front end unit 121 so that the selecting unit 123 can receive data in the best receiving condition selectively from data received in the front end unit 121 and conveyed via the two channels. At this time, though propagation delay time may differ between the two channels due to an error in signal processing or transmission distance, the phase adjusting unit 122 can adjust phase of the received signal between the two channels.

Conventionally, when the transmission distance between the portable terminal 11 and the wireless base station 12 is short and therefore the occurring phase difference is relatively small, the wireless base station 12, which is given period information of the signal to be propagated in advance, uses a small-scale memory in order to match phase of the period information between the two channels by reading the phase difference from the memory.

### SUMMARY OF THE INVENTION

### Problem to be Resolved by the Invention

In the prior art described above, there is a problem in that a radio wave blind zone or other malfunctions may occur if there is any obstacle to the radio wave between the portable terminal 11 and the wireless base station 12.

In order to prevent occurrence of the radio wave blind zone described above, it may be contemplated that, in the wireless base station 12, the front end unit 121 is connected to the phase adjusting unit 122 via a optical cable so that the front end unit 121 that receives the data and the signal output from the portable terminal 11 can transmit it as a optical signal along a long distance to the phase adjusting unit 122.

In the optical transmission method, data is demultiplexed to physical layers (optical transmission frames) for transparent transfer of the data. At this time, when two data channels are multiplexed into one physical layer and transmitted serially, the phase difference between the two data channels is negligible, though there is a problem in that the serial transmission requires an increase in a signal transmission rate of the transceivers, thereby increasing the cost of parts. Further, when a redundant configuration is desirable, parallel transmission is required.

When the parallel transmission is implemented, the transmission distance between the front end unit 121 and the phase adjusting unit 122 becomes longer than in the conventional case and, consequently, the error of the transmission distance between the two channels also increases.

In the case of the transparent transmission of the data including the period information for phase adjustment described above, when the data is transmitted via the conventional coaxial cables, the phase difference is negligible because a phase adjustment range, as well as a period specified in the period information, is small, but when the front end unit 121 is connected to the phase adjusting unit 122 by the optical cables, the optical cables cannot be made longer than in the conventional case because it cannot be determined accurately which channel is advanced or which channel is delayed, if the occurring phase difference is longer than a half cycle of the period information.

Further, when the front end unit 121 is connected to the phase adjusting unit 122 by the optical cables, as a phases of extracted clock signals may differ between two channels of the optical signal receiving unit in the phase adjusting unit, a clock conversion circuit is also needed to convert the different clock signals into an identical one, which may cause a phase error in its operation.

It is an object of the present invention to provide transmitters, receivers, and a system and a method for phase matching control that eliminate a phase offset in parallel transmission to allow transmission lines in plural channels to become longer.

### Means to solve the Problems

In order to attain the above object, according to an aspect of the present invention, there is provided a phase matching control system, its transmitters and receivers, and a phase matching control method, wherein each of the transmitters comprises a frame generating and transmitting unit for generating and transmitting a frame having a cycle that is not less than twice of the maximum predicted delay amount that may occur in the plural transmitting channels and a phase information inserting unit for inserting phase information that indicates a phase of the frame into the frame, and each of the receivers comprises a frame synchronization unit for receiving the frame and the phase information and a phase matching unit for matching the phase of the corresponding frames on the plurality of transmission channels based upon the phase information output from the frame synchronization unit and outputting the frame.

The transmitted frame that is generated at the cycle not less than twice of the occurring phase difference is transmitted by the transmitter that synchronizes a transmission timing of the transmitted frame among the plurality of channels, while the receiver uses the position of each synchronized frame for phase adjustment, so that the phase offset at a time of input as well as the phase offset that may occur in a long distance transmission line section can be eliminated at the same time.

According to another aspect of the present invention, at a time of data multiplexing into the transmitted frame, a position of the period information (the frame pulse) with respect to the phase of the frame is added to an overhead of the transmitted frame and transmitted as a pointer, so that the phase of the frame and the phase of the period information (the frame pulse) of the transmitted data can be determined reliably.

On the other hand, the receiver controls the phase so that the phase is matched by using a frequency converting circuit of the clock signal based upon the transmitted frame position and the pointer value that are regenerated and extracted.

### BRIEF DESCRIPTION OF THE DRAWINGS

Fig. 1 is a block diagram showing a configuration of a conventional cellular phone communication system such as WCDMA that includes a wireless base station and a portable terminal;
Fig. 2 is a block diagram showing a configuration of an optical transmitter in a system for implementing a phase matching control method at the time of transmission in plural channels according to an embodiment of the present invention;
Fig. 3 is a block diagram showing a configuration of the optical transmitter 222 in the system shown in Fig. 2;
Fig. 4 is a time chart describing a general operation of the optical transmitter 222 shown in Fig. 3;
Fig. 5 is a diagram showing a format of a frame generated by a frame generating unit 35;
Fig. 6 is a diagram showing one frame of 76.8 Mbps data that is input to the optical transmitter 222 shown in Fig. 3 in contrast with one frame of 77.78 Mbps data that is output correspondingly;
Fig. 7 is a time chart describing a generating operation of a pointer;
Fig. 8 is a time chart describing a writing operation to a FIFO 31 in the optical transmitter 222 shown in Fig. 3 in detail;
Fig. 9 is a time chart describing a reading operation from the FIFO 31 in the optical transmitter 222 shown in Fig. 3 in detail;
Fig. 10 is a block diagram showing a configuration of an optical receiver in the system shown in Fig. 2;
Fig. 11 is a time chart diagrammatically describing operation at the receiving side of the optical receiver 223 shown in Fig. 10 as well as an operation at the outputting side after phase adjustment;
Fig. 12 is a time chart describing writing operation to a FIFO 112 in Fig. 10 in detail;
Fig. 13 is a time chart describing reading operation from the FIFO 112 in Fig. 10 in detail;
Fig. 14 is a flow chart describing phase adjusting operation in the optical receiver;
Fig. 15 is a table showing an example of conversion of pointer values and generation of WADR load values; and
Fig. 16 is a graph for ease of understanding of comparing and converting process of the pointer values.

### DESCRIPTION OF THE PREFERRED EMBODIMENTS

Hereinafter, an embodiment of the present invention will be described with reference to the drawings.

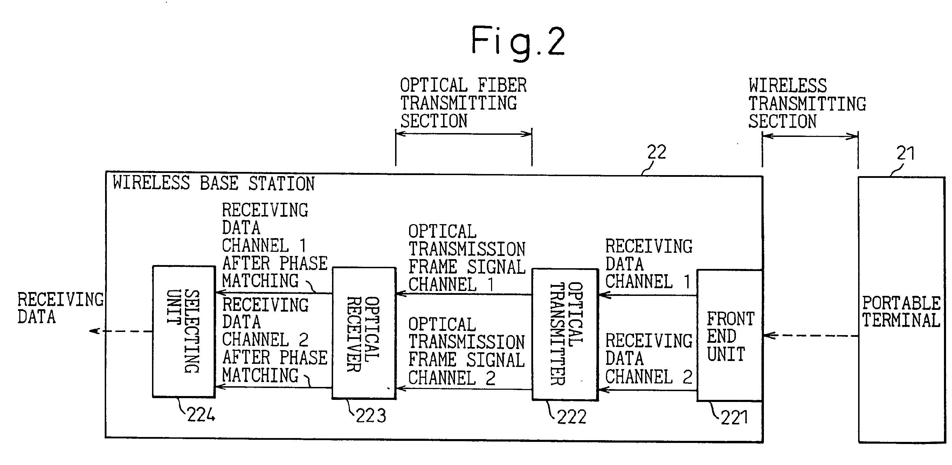

Fig. 2 is a block diagram showing a configuration of an optical transmitter in a system for implementing a phase matching control method at the time of transmission in plural channels according to an embodiment of the present invention.

In Fig. 2, a cellular phone communication system comprises a portable terminal 21 and a wireless base station 22. The wireless base station 22 comprises a front end unit 221 that includes an antenna unit, an amplifier unit and the like, an optical transmitter 222, an optical receiver 223, and a selecting unit 224. The front end unit 221 is connected to the optical transmitter 222 via two coaxial cable channels. The optical transmitter 222 is connected to the optical receiver 223 via two optical fiber channels. The optical receiver 223 is connected to the selecting unit 224 via 2 coaxial cable channels.

As optical fiber cables are less expensive than coaxial cables and have less attenuation of sensitivity even over a long distance, the distance between the optical transmitter 222 and the optical receiver 223 can be extended up to several kilometers, which allows the optical transmitter 222 to be disposed at any place out of the radio wave blind zone of the terminal 21. Therefore, it is possible to reduce the radio wave blind zone of the portable terminal 21.

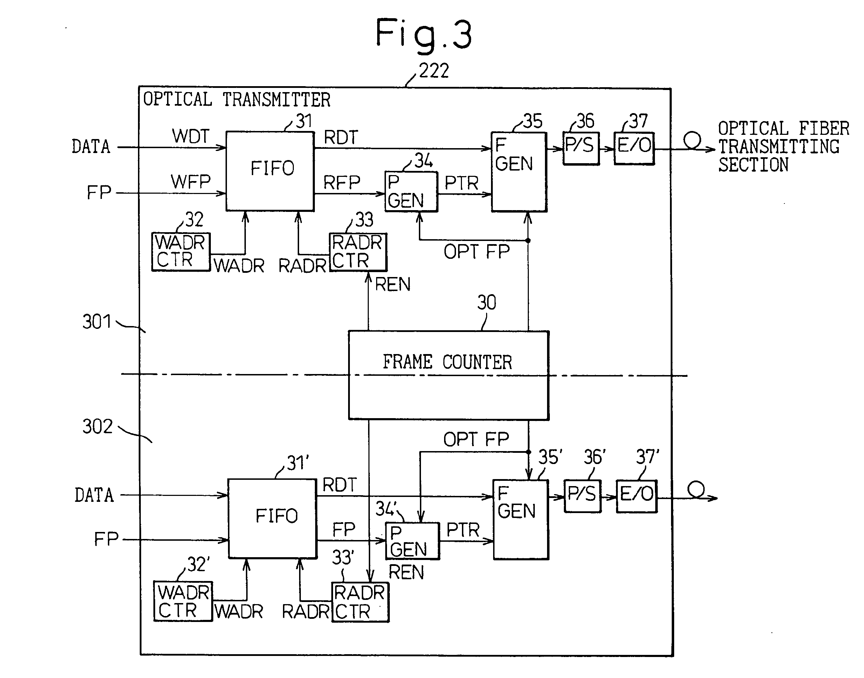

Fig. 3 is a block diagram showing a configuration of the optical transmitter 223 in the system shown in Fig. 2.

In Fig. 3, the optical transmitter 222 is comprised of optical transmitting units 301 and 302 for two channels, between which a common frame counter 30 is disposed.

The optical transmitting unit 301 of the first channel comprises a FIFO 31 that performs frame conversion and clock conversion, a write address counter (WADR CTR) 32, a read address counter (RADR CTR) 33, a pointer generating unit (P GEN) 34, a frame generating unit (F GEN) 35, a parallel/serial converting unit (P/S) 36, and a electric/optical converting unit (E/O) 37.

The optical transmitting unit 302 of the second channel is configured similarly to the first optical transmitting unit, wherein like elements are designated by like reference numerals with the addition of an apostrophe.

As seen from the description of the operation below, the common frame counter 30, the FIFO (the first-in first-out buffer) 31 that is an input and output part, the write address counter (WADR CTR) 32, the read address counter (RADR CTR) 33, the pointer generating unit (P GEN) 34, and the frame generating unit (F GEN) 35 together form a frame generating and transmitting unit that generates and transmits a frame at a cycle not less than twice of the maximum predicted delay amount that may occur on the first and second transmission channels.

Further, the pointer generating unit (P GEN) 34 forms a phase information inserting unit that inserts a position of period information (a frame pulse) in a phase of each frame.

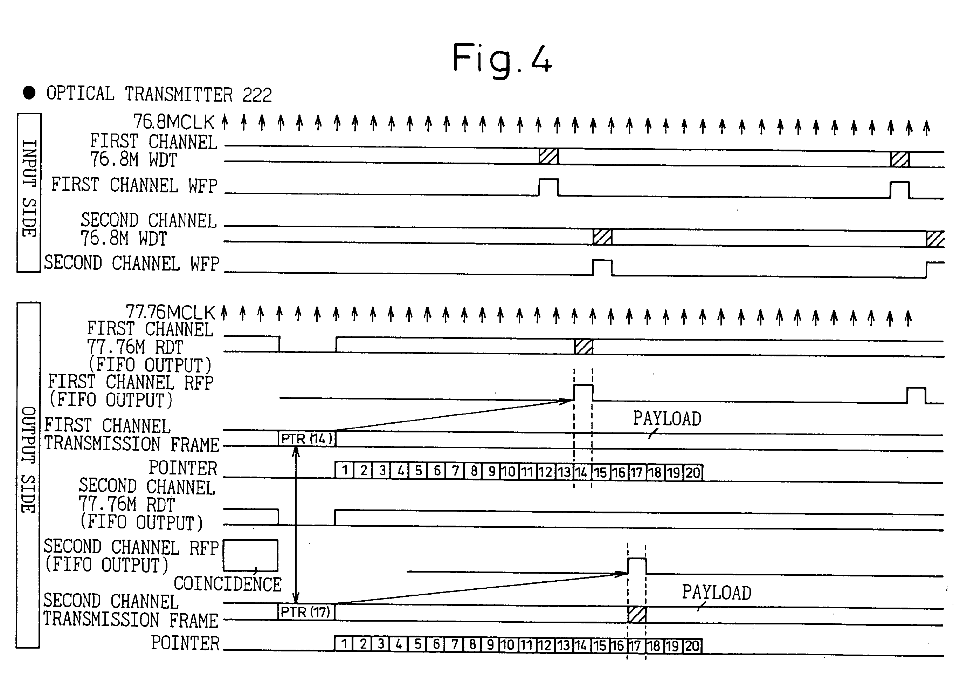

Fig. 4 is a time chart describing a general operation of the optical transmitter 222 shown in Fig. 3. In this figure, electric write data WDT of 76.8 Mbps from the front end unit 221 and a write frame pulse WFP having frequency of 3.84 MHz (20 clock cycles) are input to the FIFOs 31 and 31' of the first and second channels, respectively.

Write data corresponding to any one write frame pulse is indicated by hatched lines. Though 8 items of the parallel data are input to each channel actually, it is to be noted that only one item is shown in Fig. 4 for simplicity of illustration.

Since the first and second channels may have different transmitting conditions, the phase of the write frame pulse WFP of the first channel is not always the same as that of the second channel.

At the output side of the optical transmitter 222, the frame counter 30 that is shared by the first and second channels outputs a read enabling signal REN in response to a clock signal of 77.76 Mbps that is higher than the frequency of the write clock signal.

A read address counter (RADR CTR) 33 outputs a read address RADR of 77.76 Mbps in response to the REN but, on the other hand, the FIFO 31 outputs read data RDT of 77.76 Mbps and a read frame pulse RFP of 20 clock cycles in response to the read address RDAT.

Thus, the FIFOs 31 and 31' perform frame conversion and clock conversion.

The frame counter 30 that is shared by the first and second channels makes the read enabling signal REN low-level during 3 clocks every 243 clocks in response to the clock signal of 77.76 Mbps in order to produce an output frame pulse OPT FP every 243 x 5 clocks.

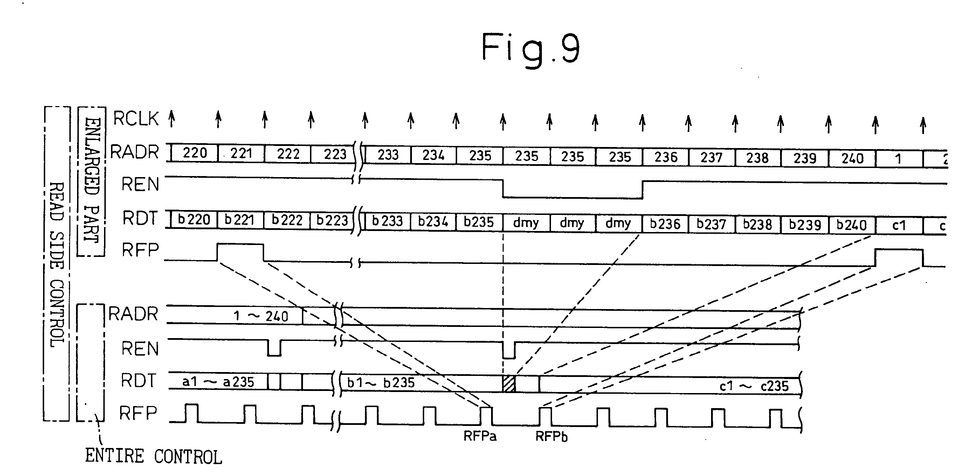

The bit rate ratio of the clock signal between the input and the output of the FIFOs 31 and 31' is 76.8 : 77.76 ≒ 80 : 81. Therefore, there are excess bits at the output side even though all of the data at the input side are mapped to the output side. In order to utilize the excess bits as an overhead of the data at the output side, dummy data is output to the excess bits. The dummy data is inserted at the same time in both the first and second channels when the read enabling signal REN is low-level (see Fig. 9).

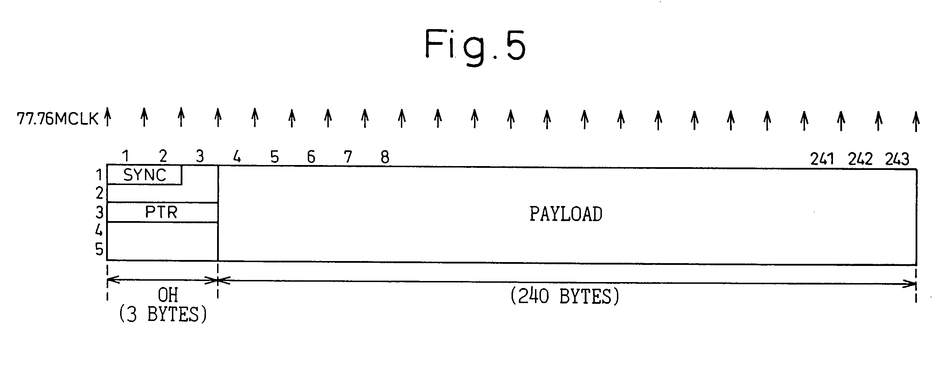

The pointer generating unit (P GEN) 34, which continues to receive the read frames RFP that are output from the FIFO 31, detects the end of output of the third dummy data among all of the dummy data in each frame with reference to the output frame OPT FP that is output from the frame counter 30, and after the end of the output, a counter in the pointer generating unit 34 counts the clock signals of 77.76 Mbps from 1 to 20 so that the counter value at that time, that is, the counter value at the time when the read frame pulse RFP is received first after the end of said third dummy data is output as a pointer value PTR (see Fig. 5).

The frame generating unit 35 generates one frame every 243 x 5 clocks in response to the output frame pulse OPT FP that is output from the frame counter 30. Synchronization bytes SYNC are inserted into leading three clocks of each frame, and a pointer PTR is inserted into 3 clocks after 243 x 2 clocks of each frame. The timing to insert the SYNC bytes and pointer PTR is determined with reference to the output frame pulse OPT FP. In the example in Fig. 4, the pointer value PTR in the first channel is 14, and the pointer value PTR in the second channel is 17.

The cycle of the transmission frame is set at 243 x 5 bytes based on the assumption that it is not less than twice the maximum predicted phase difference between the first and second channels that may occur in the optical transmission line. In the prior art, due to the fact that the write frame pulses occur only every 20 clocks, when the phase difference between the first and second channels is 10 or more clocks, it may not determined whether the first channel leads or lags the second channel, resulting in determination error of the phase difference, however, according to this embodiment, due to the fact that the SYNC occurs once every 243 x 5 clocks, the order of the first and second channels can be determined reliably if the phase difference is within 607.5 clocks.

The parallel/serial converting units 36 and 36' convert said parallel data of 77.76 Mbps x 8 into a serial data of 622.08 Mbps.

The electric/optical converting unit 37 and 37' perform E/O conversion of the serial data to output an optical serial signal in two channels. At this time, the optical transmission frames in the two channels are transmitted with matched phases.

Fig. 5 is a diagram showing a format of a frame generated by the frame generating unit 35. This is a format of 77.76 Mbps x 8 parallel data format. In Fig. 5, one frame consists of 5 lines and the size of each line is 243 bytes. The leading three bytes constitute an overhead and the other 4 - 243-th bytes constitute a payload.

The synchronization signal SYNC is inserted into the overhead of the first line. Said pointer value PTR is inserted into the overhead of the third line.

The frame generating units 35 and 35' create the first line of a frame by outputting the synchronization signal SYNC at the third clock of the first cycle in response to the output frame pulse OPT FP that is output from the frame counter 30, and then outputting the data RDT that is output from the FIFO 31 and 31' in response to the subsequent 4 - 243-th clocks. Further, the frame of the second line is created by creating the overhead at the next 3 clocks and outputting the data RDT at the subsequent 4 - 243-th clocks. Still further, the frame of the third line is created by inserting the pointer value PTR from the pointer generating units 34 and 34'into the overhead of the third line at the next 3 clocks, and then outputting the data RDT at the subsequent 4 - 243-th clocks. Then, the fourth and fifth lines are created similarly to complete one frame.

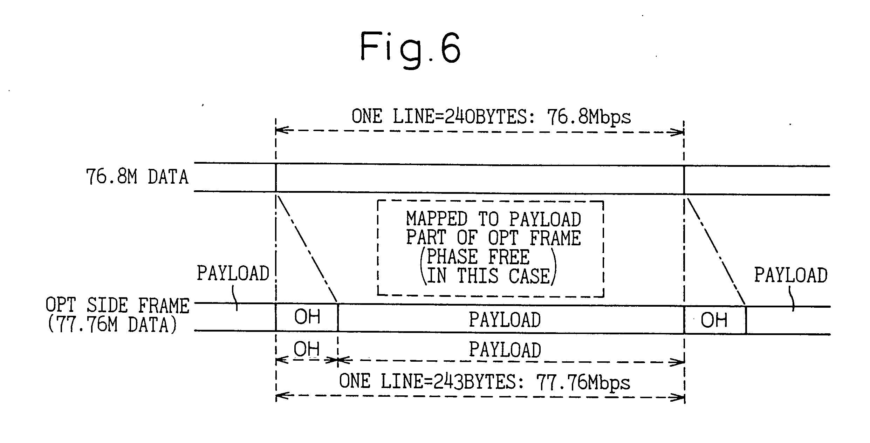

Fig. 6 is a diagram showing one frame of 76.8 Mbps data that is input to the optical transmitter 222 shown in Fig. 3 in contrast with one frame of 77.76 Mbps data that is output correspondingly. As seen from the drawing, the input data has a slower clock frequency of 76.8 Mbps and consists of only a payload of 240 bytes per one line without the overhead, while the output data has a faster clock frequency of 77.76 Mbps and has total 243 bytes consisting of the overhead OH of 3bytes and the payload of 240 bytes per one line.

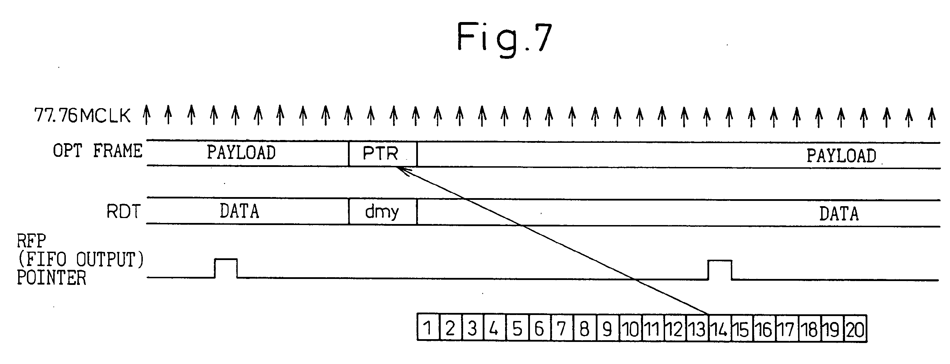

Fig. 7 is a time chart describing an operation of generating the pointer value. The frame counter 30 in the optical transmitter 222 shown in Fig. 3 outputs the output frame pulse OPT FP every 243 x 5 clocks. The frame generating units 35 and 35' generate the output (OPT) frame of 77.76 Mbps as shown in Fig. 7 in response to the output frame pulse OPT FP. The PTR value is inserted into the third line of the overhead in the OPT frame. The PTR value is inserted in a manner shown below.

The read data RDT as well as the frame pulse RFP every 20 clocks is output at the speed of 77.76 Mbps from the FIFO 31 by operation of the frame counter 30 and the read address counter (RADR CTR) 33. The pointer generating units 34 and 34' output the clock counter value after the end of the third dummy data within one frame in the read data RDT till the first read frame pulse RFP is detected as the pointer value PTR. Fig. 7 shows an example when the pointer value 14 of the first channel is output. The pointer value PTR is inserted into the overhead of the third line of the next and subsequent frames.

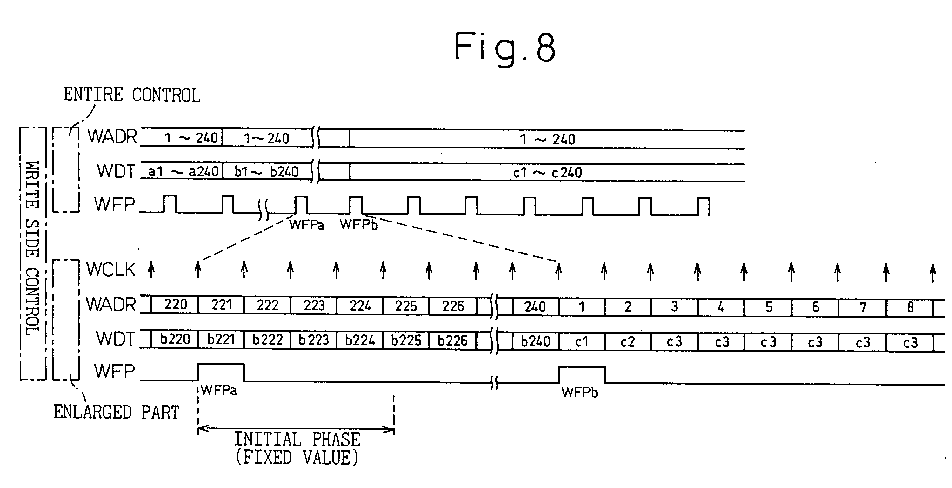

Fig. 8 is a time chart describing an operation of writing to the FIFO 31 in the optical transmitter 222 shown in Fig. 3. In the drawing, the entire control at the write side will be described first. The write address WADR 1 - 240 is output from the write address counter (WADR CTR) 32 at the speed of 76.8 Mbps, in response to which the write data WDT is written to the FIFO 31. The write data WDT consists of only payload data of 240 bytes per line a1 - a240, b1 - b240, c1 - c240 ... The write frame pulse WFP of 3.84 MHz is also written. Adjacent write frame pulses WFPa and WFPb are located 20 clocks apart.

In the lower part of Fig. 8, the area of the adjacent write frame pulses WFPa and WFPb is shown enlarged. As shown, 20 write addresses WADR 221 - 240 have occurred between the WFPa and WFPb, according to which the write--data WDT is written from b221 to b240. The frame pulse is written every 20 clocks.

With regard to data in an identical frame, an initial phase at the time of reading from the FIFOs 31 and 31' is set as a fixed value or a variation of an offset so that the reading operation can be started only after the writing operation to the FIFOs 31 and 31' in the first and second channels has been finished.

Fig. 9 is a time chart describing an operation of reading from the FIFO 31 in the optical transmitter 222 in Fig. 3 in detail. The entire control at the read side shown in the lower part of the drawing will be described first. The read address RADR 1 - 240 is output from the read address counter (RADR CTR) 33 at the speed of 77.76 Mbps. However, during three clocks while the read enabling signal REN is low-level, the read address counter (RADR CTR) 33 holds the counter value. The frame counter 30 counts the clocks from 1 - 243 at the speed of 77.76 Mbps and makes the read enabling signal REN low-level during 3 clocks every 243 clocks. While the read enabling signal REN is high-level, the FIFOs 31 and 31' output the read data a1 - a240, b1 - b240, c1 - c240 ... and, on the other hand, while the read enabling signal REN is low-level, the FIFOs 31 and 31' output the dummy data dmy. Therefore, as clearly shown in the upper side of the drawing, the read address remains constant during the three clocks corresponding to the dummy data in the read address RADR.

FIFOs 31 and 31' also output the read frame pulse RFP every 20 clocks.

In the upper side of Fig. 9, the space between the adjacent frame pulses RFPa and RFPb is shown enlarged. As shown, while the read enabling signal REN is high-level, in response to read clock signal RCLK of 77.76 Mbps, the read addresses 221 - 240 and 1 are output from the read address counters (RADR CTR) 33 and 33' to the space between the RFPa and RFPb, and then, in response to the read addresses, the read data b220 - B240 and c1 is output from the FIFO 31. Here, it is to be noted that the phase of the read address RADR is shifted by a predetermined offset, as described above. In this example, the write address WADR 225 shown in Fig. 8 corresponds to the read address RADR 221 shown in Fig. 9.

When the read enabling signal REN turns low-level, the read address counters (RADR CTR) 33 and 33' hold the counter value at the time. Then, during the holding period, the dummy data is inserted into the read data RDT.

When the REN turns high-level again, the read address counters (RADR CTR) 33 and 33' counts up to 240, and then, after the count reaches 240, the read address counters count up from 1 again.

As described above, the frame generating unit 35 inserts the synchronization signal SYNC and the pointer PTR into the first and third line of each frame of the read data, respectively in order to create the output frame.

The operation of the optical transmitter 222 will be understood from the above description.

Next, the operation of the optical receiver 223 will be described.

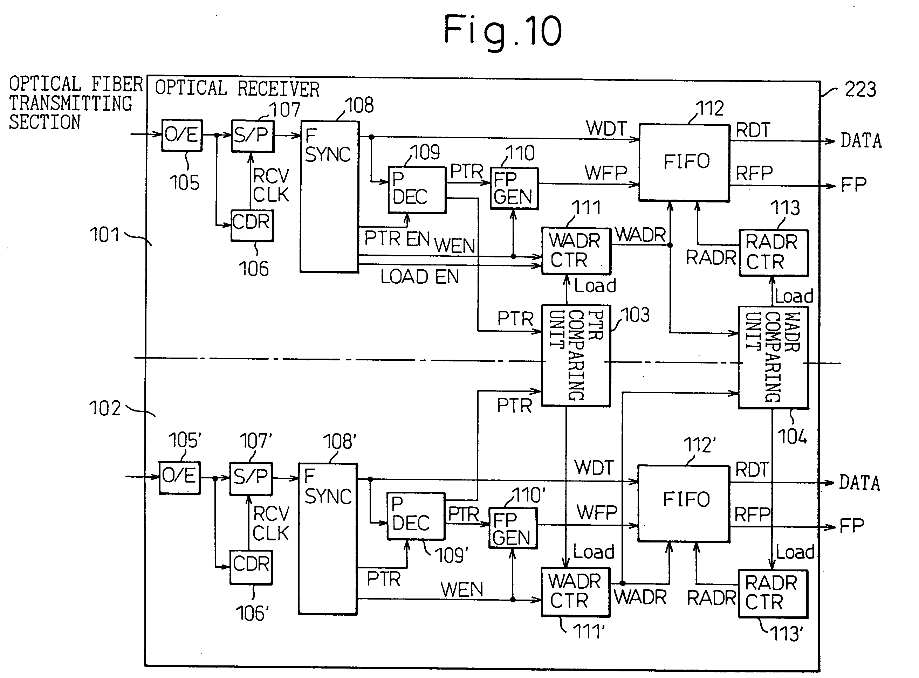

Fig. 10 is a block diagram showing a configuration of the optical receiver in the system shown in Fig. 2. In Fig. 10, the optical receiver 223 is comprised of optical receiving units 101 and 102 for two channels, between which a pointer comparing unit (PTR COMP) 103 and a write address comparing unit (WADR COMP) 104, that are shared by the two channels, are disposed.

The optical receiving unit 101 of the first channel comprises a optical/electric converting unit 105, a clock detecting and reading unit (CDR) 106 for extracting a receiving clock (RCV CLK) from a received signal, a serial/parallel converting unit (S/P) 107 for converting serial data into parallel data in response to the receiving clock (RCV CLK), a frame synchronization circuit (F SYNC) 108 for extracting and outputting write data WDT, a pointer value PTR, and a write enabling signal WEN from the received signal, a point decoder (P DEC) 109, a frame pulse generating unit (FP GEN) 110, a write address counter (WADR CTR) 111-for outputting a write address in response to an output of the pointer comparing unit (PTR COMP) 103, a FIFO 112 that is an input/output part to perform frame conversion and clock conversion, and a read address counter (RADR CTR) 113 for generating a read address to the FIFO 112 in response to an output of the write address comparing unit (WADR COMP) 104.

The optical receiving unit 102 of the second channel is configured similarly to the first optical receiving unit 101, wherein like elements are designated by like reference numerals with the addition of an apostrophe.

As seen from the description of the operation below, the frame synchronization circuit (F SYNC) 108 constitutes a frame synchronization unit and, on the other hand, the pointer decoder (P DEC) 109, the frame pulse generating unit (FP GEN) 110, the write address counter (WADR CTR) 111 for outputting the write address in response to the output from the pointer comparing unit (PTR COMP) 103, the FIFO 112 that performs the frame conversion and the clock conversion, and the read address counter (RADR CTR) 113 for generating the read address to the FIFO 112 in response to the output of the write address comparing unit (WADR COMP) 104 together constitute a phase matching unit.

Next, the operation of the optical receiving units 101 and 102 will be described.

In the optical receiver 223, the optical/electric converting units 105 and 105' convert an optical signal received in the first and second channels into an electric signal, the clock detecting units (CDR) 106 and 106' regenerate a received clock RCV CLK, and the serial/parallel converting units (S/P) 107 and 107' convert a serial signal into parallel data of 77.76 Mbps x 8.

Then, the frame synchronization circuits (F SYNC) 108 and 108' separate the write data WDT from the payload part by establishing synchronization of the optical transmission frame. More specifically, the frame synchronization circuits detect the leading bytes by detecting the SYNC of 3 clocks from the received data in the first channel, separate 240 bytes subsequent to the 3 clocks as write data WDT, and then output a pointer enabling signal PTR EN 240 + 243 clocks after the SYNC bytes. When the pointer decoders (P DEC) 109 and 109' receive the pointer enabling signal PTR EN, the pointer decoders extract a pointer value PTR of 3 bytes that is inserted into the write data WDT to output it to the frame pulse generating unit (FP GEN) 110 and the pointer value comparing unit 103.

The frame pulse generating units (FP GEN) 110 and 110' receive a write enabling signal WEN and a load enabling signal (LOAD EN) from the frame synchronization circuits (F SYNC) 108 and 108' and receive a load value LOAD from the pointer comparing units 103 and 103' to generate a write address WADR to the FIFOs 112 and 112', respectively.

The write enabling signal WEN is low-level during each of 3 clocks when the overhead is output from the frame synchronization circuit (F SYNC) 108, wherein the write address counter (WADR CTR) 111 holds the immediately preceding address while the write enabling signal is low-level.

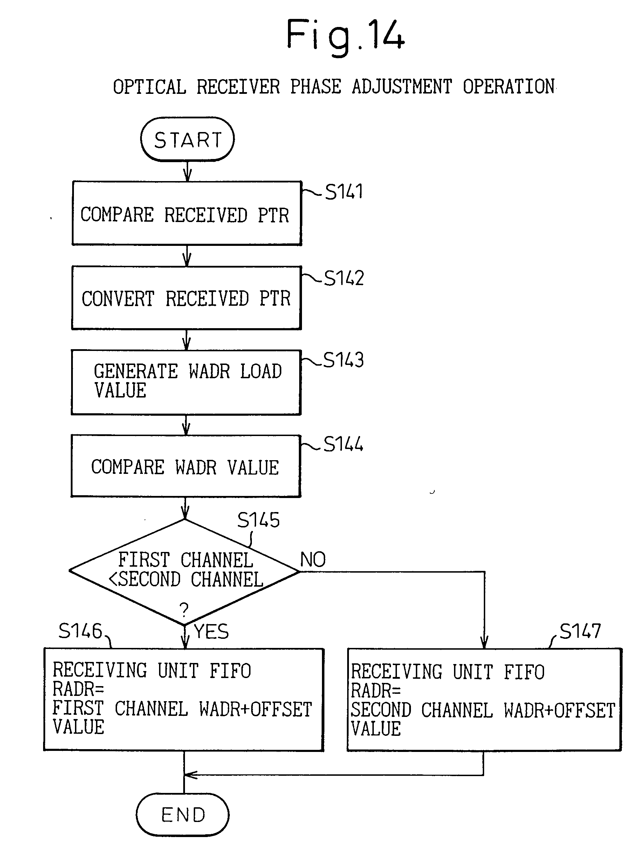

The pointer value comparing unit 103 that is shared by the first and second channels compares the pointer values from the first and second channels to output the load value. The load value is defined so that a value made by adding the pointer value to the load value is a fixed value, which is 41 in this example. A way to generate the load value will be described later with reference to Fig. 14 - 16.

Based upon the load value and the pointer value, the write address counters (WADR CTR) 111 and 111' output the write address. This allows the phase difference of the data corresponding to the same write frame pulse WFP between the first and second channels to be recognized. Then, in response to the write address WADR, the write data WDT and the write data WFP is written to the FIFOs 112 and 112'.

In a reading operation, from the FIFOs 112 and 112', the write address comparing unit 104 operates so that the read data RDT and the read frame pulse RFP can be read from the read address counters (RADR CTR) 113 and 113' in response to the read address that is common to the first and second channels.

To perform the above operation, the write address comparing unit 104 compares the write addresses WADR to give the smaller write address WADR with the addition of a predetermined offset value to the read address counter (RADR CTR) 113 or 113' as the load value. It allows the read address counters (RADR CTR) 113 and 113' to generate the read address RADR that is common to the first and second channels. The speed of the output read clock is 76.8 Mbps, which is same as the input clock of the optical transmitter 222.

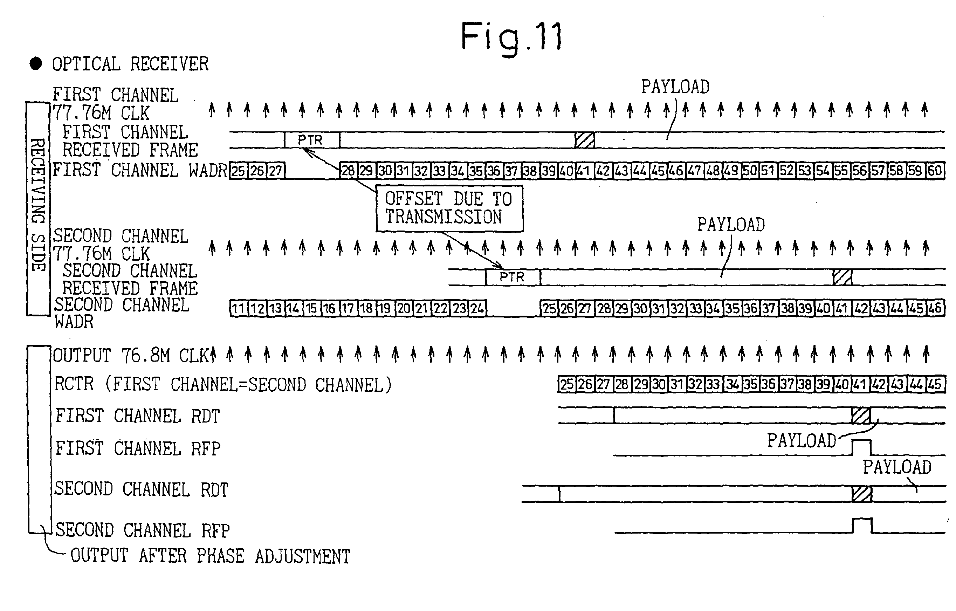

Fig. 11 is a time chart diagrammatically describing the operation at the receiving side of the optical receiver 223 shown in Fig. 10 as well as the outputting side after phase adjustment.

As shown, in the first channel, the position of the pointer PTR in the received frame is detected first, and then the load value LOAD is output from the pointer value comparing unit 103 and the write address counter (WADR CTR) 111 operates so that the write address WADR that is ahead by the pointer value 14 is 41.

On the others hand, in the second channel, the position of the pointer PTR in the received frame is detected first, and then the load value LOAD is output from the pointer value comparing unit 103 and the write address counter (WADR CTR) 111 operates so that the write address that is ahead by the pointer value 14 is 41.

Though the optical transmitter 222 outputs the data in the first and second channels with matched phase, the receiving time of the pointer value by the optical receiver 223 in the first channel is different from one in the second channel, because there is an error in transmission distance due to the long transmission path between the optical transmitter 222 and the optical receiver 223.

In the outputting operation after phase adjustment shown in the lower part of Fig. 11, the write address comparing unit (WADR COMP) 104 compares the write addresses WADR between the first and second channels and gives the load value to the read address counter (READ CTR) 113 or 113' in order to match the phases with reference to one of the channels at which the value 41 arrives later than the other. The read address counters (READ CTR) 113 and 113' output the same read address RADR simultaneously based upon this load value. It allows the read data RDT and the read frame pulse RFP to be output in response to the read address that is common to the first and second channels. The receiving party receives one of the two outputs from the two channels that has better reception conditions selectively.

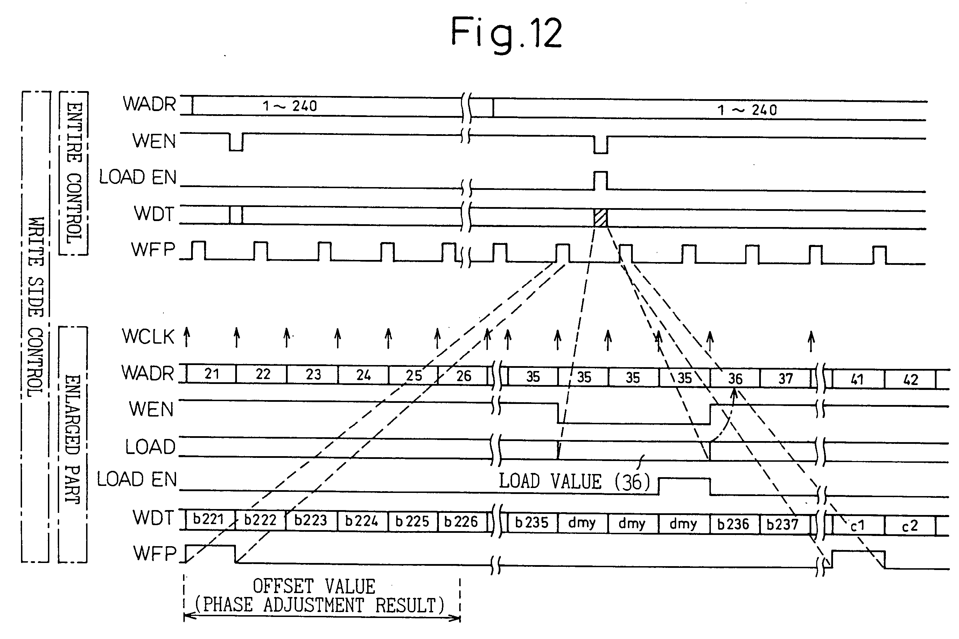

Fig. 12 is a time chart describing writing operation to the FIFO 112 in Fig. 10 in detail.

The entire operation is shown in the upper part of Fig. 12, while the operation for adjacent two write frame pulses is shown enlarged in the lower part of Fig. 12.

In Fig. 12, the write address counter (WADR CTR) 111 generates addresses from 1 to 240 repeatedly in response to the write enabling signal WEN. However, during each period of the three-clock overhead in the received frame, the write enabling signal WEN is low-level and the write address counter (WADR CTR) 111 holds the immediately preceding count value. While the write enabling signal WEN is low-level, the write data WDT consists of overhead information, which is the synchronization signal SYNC, the pointer value PTR or the dummy data. The value held in the address counter (WADR CTR) 111 as described above is generated by the pointer (PTR) comparing unit 103 in a manner shown in Fig. 14 - 16.

In one frame (for 243 x 5 clocks), during the overhead into which the pointer value is inserted, the write enabling signal is low-level. From the clock immediately after the LOAD EN turns high-level, the write address counter (WADR CTR) 111 counts the value from 1 to 240 using the load value determined as described above as an initial value.

In Fig. 12, while the write enabling signal WEN is low-level, the value of the address counter is kept at 35 and, at the third clock of the low-level period, the load enabling signal LOAD EN turns high-level during one clock. The write address counter (WADR CTR) 111 restarts to count from the clock signal immediately after the LOAD EN turns high-level.

Based upon the counter value after the end of the low-level period of the WEN till the first write frame pulse WFP is detected -(the pointer value, 6 in the example of Fig. 12), the frame pulse generating unit 110 generates the load value LOAD, which is inserted into the next frame. Thus, in the first and second channels, after the position of the pointer PTR in the received frame is detected, the load value is output from the pointer value comparing unit 103 so that the write address preceding by the pointer value is output to allow the write address counter (WADR CTR) 111 to operate.

Consequently, the write address of the data at the position of the first WFP after the WEN is common to the first and second channels. In Fig. 12, the write address of the data at the position shown by said WFP is 41.

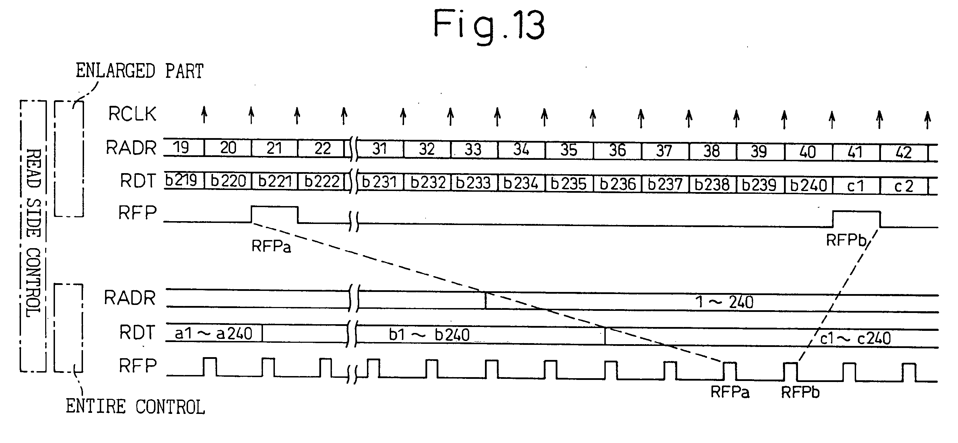

Fig. 13 is a time chart describing a reading operation from the FIFO 112 in Fig. 10.

The entire operation is shown in the upper part of Fig. 13, while the operation for adjacent two read frame pulses RFP is shown enlarged in the lower part of Fig. 13.

The write address comparing unit 104 compares the write address WADR to the FIFO 112 in the first channel to the write address WADR to the FIFO 112' in the second channel to define the read address RADR by adding an offset value to the smaller write address value. This offset value is defined so that the read operation is performed after the write operation to both the FIFOS 112 and 112' has completed, and the offset value is output to the read address counter (RADR CTR) 113 as a load value. In case of Fig. 13, the read address repeats 1 - 240, in response to which the read data RDT a1 - a240, b1 - b240, c1 - c240 ... is output, and the read frame pulse RFP is output every 20 clocks of the 76.8 Mbps clock signals.

In the enlarged view in Fig. 13, the read address 19 - 42 is shown enlarged, and correspondingly, the read data b21 - b240 and c1, c2 as well as the two read frame pulses RFPa and RFPb are shown. It can be seen that the cycle of the read frame pulse RFP is 20 bits.

Fig. 14 is a flow chart describing phase adjusting operation in the optical receiver described above. In the drawing, the receiving pointer value is compared between the first and second channels in step S141, and then the receiving pointer value PTR is converted in step S142. Next, the load value of the write address is generated in step S143.

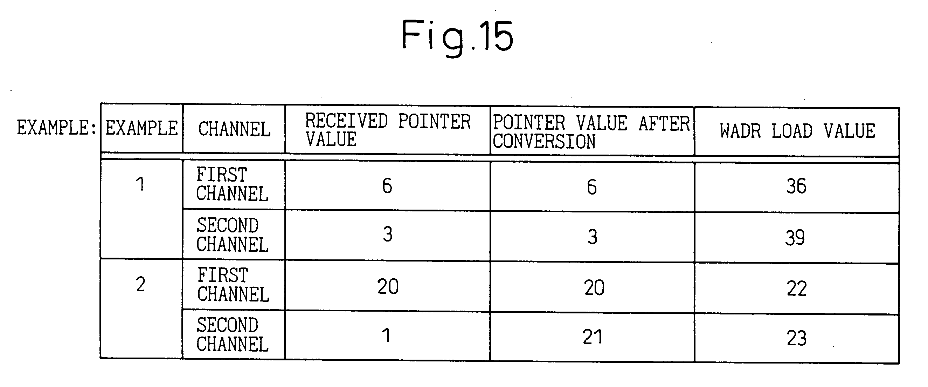

More specifically, as shown in Fig. 15, when the pointer value (PTR) comparing unit 103 compares the pointer value between the first and second channels, if the difference is not less than the 10 bits that is a half cycle of the frame pulse cycle, the pointer value comparing unit converts the smaller pointer value by adding 20 to the value and defines a holding value by subtracting the converted pointer value from 42 (a value output from the optical transmitter and having a matched phase with the addition of 1).

Then, the write address is compared between the FIFOs 112 and 112' in step S144, and then, if the load value in the first channel is smaller than the value in the second channel, the read address RADR is defined by adding an offset value to the write address in the first channel in step S146, or if the load value is equal to or larger than the value in the second channel, the read address RADR is defined by adding the offset value to the write address in the second channel in step S147.

Fig. 15 is a table showing an example of a conversion of pointer values and a generation of a load value for a write address.

For example, as shown in Example 1 in Fig. 15, when the receiving pointer value in the first channel is 6 and the receiving pointer value in the second channel is 3, the pointer values remain unchanged even after conversion since the difference is less than 10, consequently the load value for the first channel is 42 - 6 = 36, and the load value for the second channel is 42 - 3 = 39. On the other hand, as shown in Example 2, when the receiving pointer value in the first channel is 20 and the receiving pointer value in the second channel is 1, the pointer value for the first channel remains unchanged after conversion, but the pointer value for the second channel is converted into 21 that is a value made by adding 20 to 1, consequently the load value for the first channel is 42 - 20 = 22, and the load value for the second channel is 42 - 21 = 23.

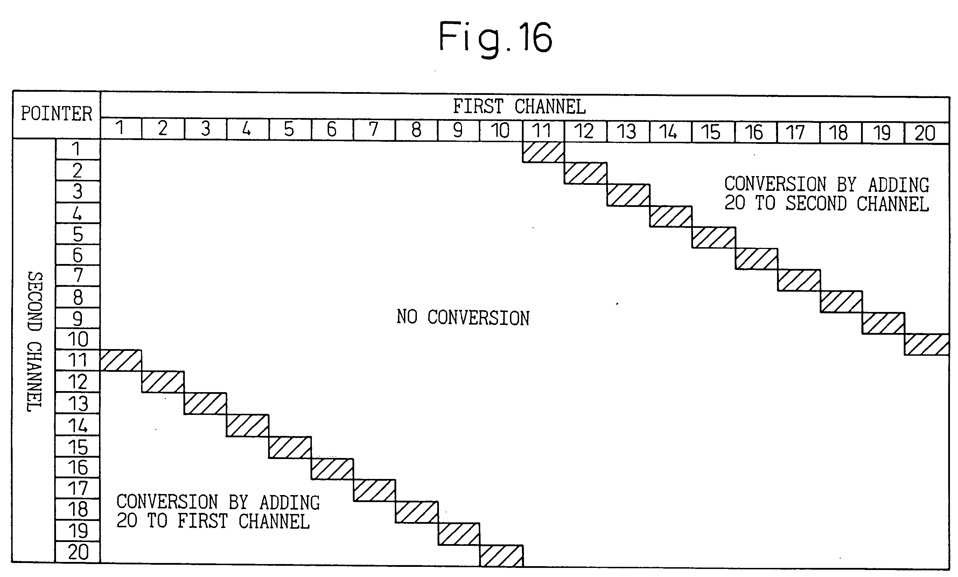

Fig. 16 is a graph to allow understanding of the comparing and converting process of the pointer values described above. As shown in the figure, if the difference of the pointer values between the first and second channels is less than 10, the converting operation of the pointer values is not performed. If the difference of the pointer values between the first and second channels is equal to or more than 10, the pointer value after the conversion is a value made by adding 20 to the smaller pointer value.

Though, in the above description, an example wherein a phase offset of optical transmission signals between two channels is adjusted is described, it will be obvious that a phase offset of optical transmission signals between three or more channels may similarly be adjusted.

Further, though the clock signal frequency at the input side of the optical transmitter 222 is 76.8 Mbps, the clock signal frequency at the output side is 77.76 Mbps, and the relationship of the clock signal frequency values between the first and second channels is inverted in the optical receiver 223 in the above described example, the present invention is not limited to such conditions, thus, these clock signal frequency values may be any values if the clock signal frequency at the input side is lower than the one at the output side in the optical transmitter and the clock signal frequency at the input side is higher than the one at the output side in the optical receiver.

Still further, though the cycle of one frame generated by the frame counter and the frame generating unit is assumed to be 243 x 5 clocks in the above embodiment, the present invention is not limited to such conditions, thus, the cycle may be any value as long as it is not less than twice the maximum predicted phase delay amount.

### Effects of the Invention

As is evident from the above description, according to the present invention, in two or more channels of signal transmission path, a phase offset at the time of input and a phase offset in a long distance transmission path can be eliminated simultaneously so that the phase offset at the time of input and the phase offset in the long distance transmission path can be totally adjusted, even if these offsets are in opposite directions, and the transfer time for phase matching of the circuit can be reduced.

Further, a large phase offset in the long distance transmission path can also be made acceptable. Therefore, long distance transmission along optical fibers can be implemented.

Still further, the part that has been implemented by using expensive coaxial cables in a conventional system can be replaced by the phase adjustment system according to the present invention.

## Claims

1. A transmitter for transmitting data including phase information in plural transmission channels that comprises a plurality of transmitting units that transmit identical data to the plural channels, wherein each of said transmitting units comprises a frame generating and transmitting unit for generating and transmitting a frame having a cycle that is not less than twice the maximum predicted delay amount that may occur in the plural transmission channels, and a phase information inserting unit for inserting the phase information that indicates a phase of said frame into said frame.

2. A receiver for receiving data including phase information from plural transmission channels that comprises a plurality of receiving units that receive identical data from the plural channels, wherein each of said receiving units comprises a frame synchronization unit for receiving a frame having a cycle that is not less than twice the maximum predicted delay amount that may occur in the plural transmission channels and the phase information that indicates a phase of said frame included in said frame, and a phase matching unit for matching the phase of the corresponding frame on said plural transmission channels based upon said phase information output from said frame synchronization unit and outputting the frame.

3. A phase matching control system comprising a transmitter that comprises a plurality of transmitting units that transmit identical data to plural channels and a receiver that comprises a plurality of receiving units that receive data in said plural channels that is output from said transmitter, wherein
each of said transmitting units comprises a frame generating and transmitting unit for generating and transmitting a frame having a cycle that is not less than twice the maximum predicted delay amount that may occur in the plural transmission channels, and a phase information inserting unit for inserting phase information that indicates a phase of said frame into said frame, and
each of said receiving units comprises a frame synchronization unit for receiving said frame and said phase information, and a phase matching unit for matching the phase of the corresponding frame on said plural transmission channels based upon said phase information output from said frame synchronization unit and outputting the frame.

4. A transmitter according to claim 1, further comprising a frame counter that is shared by said plurality of transmitting units, wherein
said frame generating and transmitting unit in each of said plurality of transmitting units comprises:
a first input and output unit for inputting write data and a write frame pulse of a predetermined cycle that indicates a phase of said write data in response to a write address and for outputting read data and a read frame pulse that correspond to said write data and said write frame pulse, respectively in response to a read clock signal having a frequency higher than a write clock signal to generate said write address; and
a frame generating unit for generating an output frame including said read data in cooperation with said frame counter in response to said read clock signal, and
said phase information inserting unit comprises a pointer value generating unit for inserting a pointer value indicating phase information of said read frame pulse corresponding to identical data that is output from all of said transmitting units into an output frame that is output from said frame generating unit at a timing that is common to said output frame output from all of said transmitting units.

5. A receiver according to claim 2, further comprising a pointer value comparing unit and a write address comparing unit that are shared by said plurality of receiving units, wherein
said phase matching unit in each of said plurality of receiving units comprises:
a frame synchronization unit for extracting and outputting said read data, said pointer value, a write enabling signal including phase information of said pointer value, and said frame pulse of the predetermined cycle for each frame of the input data from the transmitting unit according to claim 4, in response to a receiving clock signal extracted from said read data;
a write address counter for generating a write address in response to said receiving clock signal, the write address being generated according to a phase difference of the write data corresponding to a same frame pulse between said plural transmission channels, based upon difference between a plurality of pointer values from said plural transmission channels that are calculated by said pointer value comparing unit; and
a second input and output unit for inputting said data and said frame pulse in response to said write address and for outputting said data and said frame pulse in response to a read address having frequency lower than said receiving clock signal, and
the read address of said data and said frame pulse output from said second input and output unit is formed so that the read address coincides with a value that is not less than the maximum value of the write address having an identical phase from said write address counter of said plurality of receiving units.

6. A phase matching system comprising a transmitter according to claim 4 and a receiver according to claim 5.

7. A phase matching system according to claim 6, wherein the first input and output unit in said transmitting unit is a first FIFO, and the frequency of the write clock signal to write said data and said frame pulse to said first FIFO is lower than the frequency of the read clock signal to read said data and said frame pulse from said first FIFO.

8. A phase matching system according to claim 7, wherein said second input and output unit in said receiving unit is a second FIFO, and the frequency of the clock signal to write said data and said frame pulse to said second FIFO is higher than the frequency of the read clock signal to read said data and said frame pulse from said second FIFO.

9. A phase matching system according to claim 8, wherein the frequency of the write clock signal to write said data and said frame pulse to said first FIFO coincides with the frequency of the read clock signal to read said data and said frame pulse from said second FIFO.

10. A phase matching system according to claim 8 or 9, wherein the frequency of the read clock signal to read said data and said frame pulse from said first FIFO coincides with the frequency of the write clock signal to write said data and said frame pulse to said second FIFO.

11. A data transmission method for transmitting data including phase information to plural transmission channels to transmit identical data to the plural channels by a plurality of transmitting units, wherein each of said transmitting units generates a frame having a cycle that is not less than twice the maximum predicted delay amount that may occur in the plural transmission channels and inserts the phase information that indicates a phase of said frame into said frame to transmit said frame.

12. A data reception method for receiving data including phase information from plural transmission channels to receive identical data from the plural channels by a plurality of receiving units, wherein each of said receiving units receives a frame having a cycle that is not less than twice the maximum predicted delay amount that may occur in the plural transmission channels and phase information that indicates a phase of said frame included in said frame in synchronization with said phase information, and outputs corresponding frames in said plural transmission channels with matched phases based upon said phase information.

13. A phase matching control method comprising a data transmission method according to claim 11 and a data reception method according to claim 2.

14. A data transmission method according to claim 11, in said frame generating and transmitting unit in each of said plurality of transmitting units, comprising the steps of:
inputting write data and a write frame pulse having a predetermined cycle that indicates a phase of said write data to a first input and output unit, and outputting read data and a read frame pulse that correspond to said write data and said write frame pulse, respectively, in response to a read clock signal having frequency that is higher than a write clock signal to generate said write address;
generating an output frame including said read data in cooperation with a frame counter that is shared by said plurality of transmitting units in response to said read clock signal; and
inserting a pointer value indicating phase information of said read frame pulse corresponding to identical data that is output from all of said transmitting units into an output frame that is output from said frame generating unit at a timing that is common to said output frame output from all of said transmitting units.

15. A data reception method according to claim 12, in said phase matching unit in each of said plurality of receiving units, comprising the steps of:
extracting said read data, said pointer value, a write enabling signal including phase information of said pointer value, and a frame pulse of said predetermined cycle for each frame of the input data from the transmitting unit according to claim 14, in response to a receiving clock signal extracted said read data;
generating a write address in response to said receiving clock signal, the write address being generated according to phase difference of the write data corresponding to a same frame pulse between said plural transmission channels, based upon difference between a plurality of pointer values from said plural transmission channels that are calculated by the pointer value comparing unit that is shared by said plurality of receiving units; and
inputting said data and said frame pulse to the second input and output unit in response to said write address and outputting said data and said frame pulse from said second input and output unit in response to a read address having a frequency lower than the frequency of said receiving clock signal, and wherein
the read address of said data and said frame pulse output from said second input and output unit is formed so that the read address coincides with a value that is not less than the maximum value of the write address having an identical phase from said write address counter of said plurality of receiving units.

16. A phase matching control method comprising a data transmission method according to claim 14 and a data reception method according to claim 15.

17. A phase matching control method according to claim 16, wherein the first input and output unit in said transmitting unit is a first FIFO, and the frequency of the write clock signal to write said data and said frame pulse to said first FIFO is lower than the frequency of the read clock signal to read said data and said frame pulse from said first FIFO.

18. A phase matching control method according to claim 17, wherein said second input and output unit in said receiving unit is a second FIFO, and the frequency of the clock signal to write said data and said frame pulse to said second FIFO is higher than the frequency of the read clock signal to read said data and said frame pulse from said second FIFO.

19. A phase matching control method according to claim 18, wherein the write clock signal to write said data and said frame pulse to said first FIFO coincides with the frequency of the read clock signal to read said data and said frame pulse from said second FIFO.

20. A phase matching control method according to claim 18 or 19, wherein the frequency of the read clock signal to read said data and said frame pulse from said first FIFO coincides with the frequency of the write clock signal to write said data and said frame pulse to said second FIFO.
